# EUROPEAN PATENT APPLICATION

(11) **EP 3 409 330 A1**
(43) Date of publication of application: **05.12.2018**
(21) Application number: 17744622.6
(22) Date of filing: 31.01.2017
(51) Int. Cl.: A63B 22/16, A63B 26/00, A63B 23/02, A63B 23/04, A63B 71/06

(54) **COMPACT BALANCE BOARDS AND SYSTEM USING SAME**

(30) Priority: 28.01.2016 KR 20160010610
(71) Applicant: Youm, Sang Bong, Gwangmyeong-si, Gyeonggi-do 14230 (KR); Yeom, Seoung Ho, Gwangmyeong-si, Gyeonggi-do 14320 (KR)
(72) Inventor: YOUM, Sang Bong, Gwangmyeong-si Gyeonggi-do 14320 (KR)
(74) Representative: Stolmár & Partner Patentanwälte PartG mbB
(86) International application number: PCT/KR2017/001039
(87) International publication number: WO 2017/131501

(57) **Abstract**

The present invention provides compact balance boards including: a first board having a plate shape; a second board spaced a predetermined distance from a lower portion of the first board and parallel to the first board; a shaft coupled to a bottom portion of the first board or extending in one piece from the bottom portion of the first board; a pivot support connecting the shaft and the second board so as to allow three-dimensional pivotal motions in which the first board or the second board is shaken and rotated; at least one elastic member positioned between the first board and the second board in contact with the first board and the second board so as to provide elasticity for keeping the first board and the second board in parallel to each other; and a sliding member installed on one end portion or both end portions of the elastic member so as to allow the elastic member to be slidingly rotated when the first board or the second board is rotated.

## Description

### TECHNICAL FIELD

The present invention relates to compact balance boards and a system using the compact balance boards, and more particularly to, compact balance boards implementing three-dimensional pivotal motions by using two boards spaced apart from the floor so as to be shaken and rotated, and a system using balance boards for providing balance-exercise effects through three-dimensional pivotal motions implemented by the balance boards or creating contents relating to the balance boards by converting the three-dimensional pivotal motions into computer input information.

### BACKGROUND ART

Snowboards, skateboards, surfboards, wakeboards, or skis are board-type sport apparatuses for improving balance ability and physical strength as well as arousing interest in exercise. When a user rides on such a board-type sport apparatus, the center of gravity of the user constantly varies, and thus the user has to keep balance to properly control his/her posture. Therefore, since the user continuously tries to keep balance, the user can improve his/her balance ability and physical strength. However, users not only have to go particular places such as a river, sea, road, ski resort, or skating rink but also have seasonal limitations to use such board-type sport apparatuses. That is, it is difficult to use such board-type sport apparatuses at a desired time without limitations.

To satisfy such requirements, Nintendo has developed the Wii balance board configured to be easily used at a convenient place and time without locational and seasonal limitations and to provide board-based entertainment contents such as board sport simulations or board sport games. However, since a user just varies his/her posture two-dimensionally on the Wii balance board fixed to the floor, the user may not feel the effect of three-dimensional motions, and may be limited to improvementing his/her balance ability and physical strength. In addition, sensors of the Wii balance board for sensing the movement of a rider provide only limited information such as weight variations, and thus the creation or application of balance-related contents are also limited.

In addition, there is a balance trainer which is a conventional balance exercise apparatus formed by attaching a hemispherical convex shape to a bottom surface of a board such that a user may ride on an upper surface of the board and move while constantly varying his/her center of gravity. However, the balance trainer is not smoothly rotated due to friction with the floor, and it is impossible to develop balance-related contents using the balance trainer.

### DETAILED DESCRIPTION OF THE INVENTION

### TECHNICAL PROBLEM

The present invention is to provide compact balance boards and compatible balance boards for implementing three-dimensional pivotal motions by using two boards spaced a predetermined distance from the floor so as to be shaken and rotated.

In addition, the present invention is to provide a balance board system configured to convert motions of balance boards into computer input information based on pivotal motions of the balance boards so as to provide a balance program for curing balance disorders such as a tic disorder, a balance diagnosis and prescription program for users, balance-related sport simulations, sport games, balance entertainment contents such as virtual reality, etc.

### TECHNICAL SOLUTION

To achieve the above-described objectives, compact balance boards of the present invention includes: a first board having a plate shape; a second board spaced a predetermined distance from a lower portion of the first board and parallel to the first board; a shaft coupled to a bottom portion of the first board or extending in one piece from the bottom portion of the first board; a pivot support connecting the shaft and the second board so as to allow three-dimensional pivotal motions in which the first board or the second board is shaken and rotated; at least one elastic member positioned between the first board and the second board in contact with the first board and the second board so as to provide elasticity for keeping the first board and the second board in parallel to each other; and a sliding member installed on one end portion or both end portions of the elastic member so as to allow the elastic member to be slidingly rotated when the first board or the second board is rotated.

In addition, the pivot support may include: an inner ring coupled to the shaft and having a spherical outer surface; and an outer ring having an inner surface spherically in contact with and slidable on the outer surface of the inner ring, the outer ring being provided to an upper portion of the second board.

In addition, the pivot support may include: an inner ring formed in one piece with the shaft and having a spherical outer surface; and an outer ring having an inner surface spherically in contact with and slidable on the outer surface of the inner ring, the outer ring being provided to an upper portion of the second board.

In addition, the pivot support may include: an inner ring coupled to the shaft and having a spherical outer surface; an outer ring having an inner surface spherically in contact with and slidable on the outer surface of the inner ring; and an outer ring fixing part in which the outer ring is inserted, the outer ring fixing part being fixed to an upper portion of the second board.

In addition, the pivot support may include: an inner ring formed in one piece with the shaft and having a spherical outer surface; an outer ring having an inner surface spherically in contact with and slidable on the outer surface of the inner ring; and an outer ring fixing part in which the outer ring is inserted, the outer ring fixing part being fixed to an upper portion of the second board.

In addition, the pivot support may include: an inner ring having an inner surface contacting an outer surface of the shaft and being coupled to the shaft; and an outer ring having an inner surface spherically in contact with an outer surface of an insertion solid part for being rubbed thereon, the insertion solid part being included on an outer surface of the inner ring, the outer ring being fixed to an upper portion of the second board.

In addition, the pivot support may include: an inner ring having an inner surface contacting an outer surface of the shaft and being coupled to the shaft; an outer ring having an inner surface spherically in contact with outer surface of an insertion solid part for being rubbed thereon, the insertion solid part being included on an outer surface of the inner ring; and an outer ring fixing part in which the outer ring is inserted, the outer ring fixing part being fixed to an upper portion of the second board.

The compact balance boards may further include a board coupling part to attach an additional board including a snowboard or a skateboard to the first or the second board.

In addition, the compact balance boards may further include any one selected from: a first sensor part configured to sense a movement of the first board or the shaft; a second sensor part configured to sense a load applied to the first board; and a third sensor part attached to an end of the shaft or a position facing the end of the shaft so as to sense a positional variation of the shaft.

In addition, the compact balance boards may further include any one selected from: a first sensor part configured to sense a movement of the first board or the shaft; a second sensor part configured to sense a load applied to the first board; and a third sensor part attached to an end of the shaft or a position facing the end of the shaft so as to sense a positional variation of the shaft.

A balance board system of the present invention includes: the compact balance boards; a central processing unit configured to receive a signal from at least one of the first to third sensor parts and process information; and a display unit configured to display information received from the central processing unit.

The balance board system may further include an external input device to input information to the central processing unit.

In addition, the compact balance boards may further include an auxiliary elastic member placed between the outer ring and the second board so as to elastically support vertical shaking of the first board or the second board.

### ADVANTAGEOUS EFFECTS OF THE INVENTION

According to the compact balance boards and the system using the compact balance boards, it is possible to effectively feel three-dimensional pivotal motions and perform balance exercises by using two boards spaced a predetermined from the floor and configured to be shaken and rotated, and such motions can be converted into computer input information to diagnose the balance ability and physical strength of a user and provide a prescription, thereby providing high balance exercise effects.

In addition, when a balance exercise is performed, three-dimensional pivotal motions including shaking and rotation of the two boards spaced a predetermined distance from the floor may be converted into computer input information as contents for providing exercise effects to users and arousing interest in exercise. In particular, balance disorders such as a tic disorder may be effectively cured according to characteristics of users, and the present invention may be effective for athletes requiring balance ability enhancement in diagnosing and improving balance ability.

In addition, balance entertainment contents such as sport simulations, sport games, or virtual reality may be provided based on a board-type exercise apparatus together with balance exercise, thereby providing both the effects of sports and entertainment, that is, sportainment (sports + entertainment).

### DESCRIPTION OF THE DRAWINGS

FIG. 1 is a cross-sectional view illustrating compact balance boards according to the present invention.
FIG. 2 is a three-dimensional view illustrating the compact balance boards according to the present invention.
FIG. 3 is a cross-sectional view illustrating compatible balance boards according to the present invention.
FIG. 4 is a three-dimensional view illustrating the compatible balance boards according to the present invention.
FIG. 5 is a cross-sectional view illustrating compatible balance boards according to the present invention.
FIG. 6 is a three-dimensional view illustrating the compatible balance boards according to the present invention.
FIG. 7 is a cross-sectional view illustrating compatible balance boards according to the present invention.
FIG. 8 is a three-dimensional view illustrating the compatible balance boards according to the present invention.
FIGS. 9 and 10 are cross-sectional views illustrating balance boards of another type according to the present invention.
FIG. 11 is a plan layout view illustrating a second sensor part.
FIG 12 is a cross-sectional view illustrating a pivot support (spherical bearing).
FIG. 13 is a cross-sectional view illustrating a pivot support (outer ring bearing).
FIG 14 is a cross-sectional view illustrating a pivot support (self-aligning bearing).
FIG. 15 is a schematic block diagram illustrating a balance board system with balance boards according to the present invention.
FIGS. 16 and 17 are cross-sectional views illustrating compact balance boards according to the present invention.

### <Descriptions of reference numerals>

| | |
|---|---|
| 10: first board | 10a: bolt |
| 12: first board | 12a: clamp |
| 14: first board | 14a: bolt |
| 16: first board | 16a: bolt |
| 17: additional board | 18: additional board |
| 19: additional board | 20: shaft |
| 30: pivot support (spherical bearing) | |
| 30a: inner ring | 30b: outer ring |
| 31: pivot support (outer bearing) | |
| 32: pivot support (self-aligning bearing) | |
| 32a: inner ring (self-aligning type) | 32b: outer ring (self-aligning type) |
| 32c: insertion solid part | 40: auxiliary coupling member |
| 50: second board | 50a: bolt |
| 50b: additional board | 52: second board |
| 54: second board | 56: second board |
| 60: elastic member | 60a: sliding member |
| 60b : auxiliary elastic member | 60c : base plate |
| 70: first sensor part | 70a: first sensor part lead-in line |
| 70b: first sensor part terminal | 80: second sensor part |
| 80a: second sensor part lead-li line | 80b: second sensor part terminal |
| 90: third sensor part | 91: third sensor part |
| 90a: third sensor part lead-in line | 91a: third sensor part lead-in line |
| 90b: third sensor part terminal | 91b: third sensor part terminal |
| 90c:pad | 91c:pad |
| 95: external input device | 100: compact balance boards (FIGS. 1 and 2) |
| 120, 140, 160: compatible balance boards (FIGS. 3, 4, 5, 6, 7, and 8) | |
| 200: balance boards | 300: central processing unit (CPU) |
| 400: display unit | |

### BEST MODE

The present invention provides compact balance boards including: a first board having a plate shape; a second board spaced a predetermined distance from a lower portion of the first board and parallel to the first board; a shaft coupled to a bottom portion of the first board or extending in one piece from the bottom portion of the first board; a pivot support connecting the shaft and the second board so as to allow three-dimensional pivotal motions in which the first board or the second board is shaken and rotated; at least one elastic member positioned between the first board and the second board in contact with the first board and the second board so as to provide elasticity for keeping the first board and the second board in parallel to each other; and a sliding member installed on one end portion or both end portions of the elastic member so as to allow the elastic member to be slidingly rotated when the first board or the second board is rotated.

### MODE OF THE INVENTION

Hereinafter, preferred embodiments of the present invention will be described in detail with reference to the accompanying drawings. In the present disclosure, like reference numerals refer to substantially the same elements. In the following description, detailed descriptions of well-known functions or configurations relating to the present invention will not be presented if it is determined that the descriptions unnecessarily obscure subject matters of the present invention.

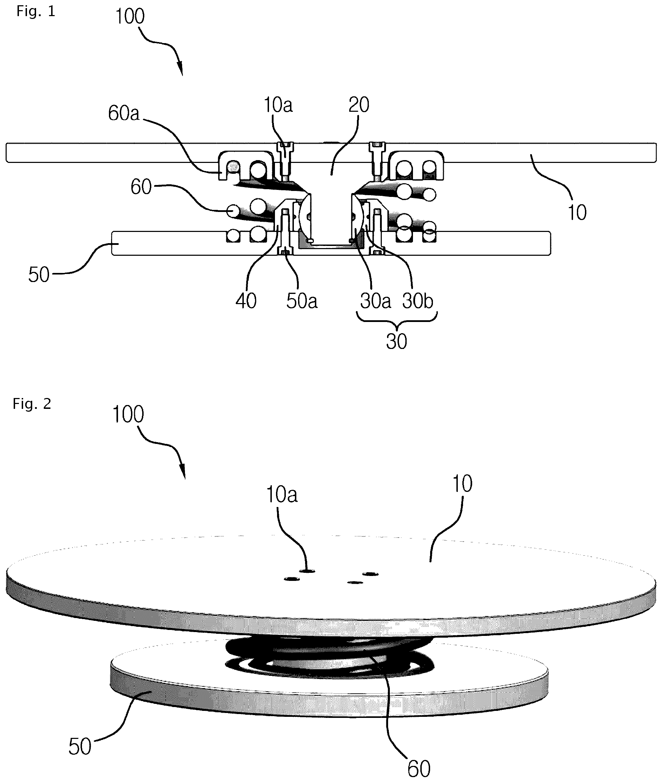

Hereinafter, compact balance boards of the present invention will be described with reference to FIG. 1.

FIG. 1 is a cross-sectional view schematically illustrating compact balance boards 100 according to the present invention.

Referring to FIGS. 1 and 2, the compact balance boards 100 includes a first board 10, a second board 50, a shaft 20, a pivot support 30, and an elastic member 60.

The first board 10 has a plate shape and is placed at an upper side.

The first board 10 is for a user to ride and is formed of a rigid material to withstand the load of a rider. According to the intended use, the first board 10 may have a shape such as a circular shape, an oval shape elongated in one direction, an elliptical shape, or a tetragonal shape, and when a user rides on the first board 10 and makes a three-dimensional pivotal motion (pivoting) in which the user shakes and rotates his/her body at a predetermined distance from the floor, the first board 10 supports the three-dimensional pivotal motion. For example, the first board 10 may be formed in a shape elongated in one direction like a board such as a snowboard, a skateboard, a surfboard, a wakeboard, or skis so as to sufficiently provide the feeling of riding on such boards, or may be formed in a circular shape for use as an exercising apparatus or for safe use by the elderly and infirm or patients having poor motor ability.

The second board 50 is installed at a predetermined distance from a bottom portion of the first board 10 in parallel to the first board 20.

The shaft 20 is coupled to the bottom portion of the first board 10 or extends in one piece from the bottom portion of the first board 10. The bottom portion of the first board 10 may be detachably coupled to the shaft 20 or may be formed in one piece with the shaft 20. In FIG. 1, it is illustrated that the shaft 20 is coupled to the first board 10 using bolts 10a on top of the first board 10.

The shaft 20 may be detachably coupled to the first board 10 by a method of using bolts. However, it should be understood that the present invention is not limited to this method. For example, coupling methods using an adhesive, a snap ring, or screws may be used, or a one-piece forming method may be used. It should be understood that these alternative configurations are also included in the scope of the present invention.

The pivot support 30 connects the shaft 20 and the second board 50 so as to allow a three-dimensional pivotal motion in which the first board 10 placed above the shaft 20 is shaken and rotated.

The pivot support 30 may have various forms according to coupling between the pivot support 30 and the shaft 20.

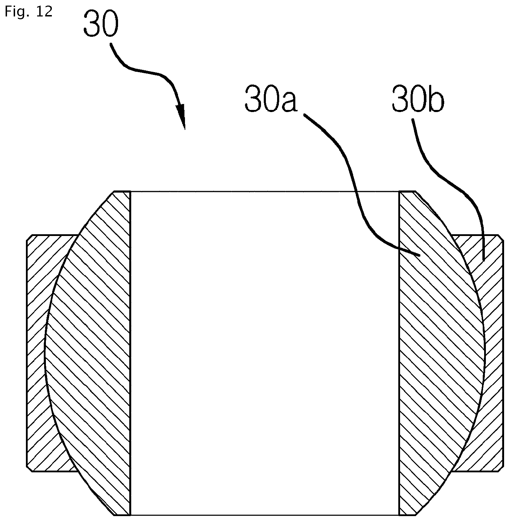

A spherical bearing is illustrated in FIG 12 as an example of the pivot support 30, and the spherical bearing includes an outer ring 30b and an inner ring 30a coupled to the inside of the outer ring 30b. The outer surface of the inner ring 30a and the inner surface of the outer ring 30b are spherical and slidable on each other.

An example of the pivot support 30 may include: an inner ring coupled to the shaft 20 and having a spherical outer surface; and an outer ring having an inner surface spherically in contact with and slidable on the outer surface of the inner ring, the outer ring being fixed to an upper portion of the second board 50. In this case, the inner ring 30a is fixedly coupled to the shaft 20, and the outer ring 30b is fixed to the upper portion of the second board 50.

Another example of the pivot support 30 may include: an inner ring formed in one piece with the shaft and having a spherical outer surface; and an outer ring having an inner surface spherically in contact with and slidable on the outer surface of the inner ring, the outer ring being provided to an upper portion of the second board. In this case, the inner ring 30a is formed in one piece with the shaft 20, that is, the shaft 20 includes the inner ring 30a, and the outer ring 30b is fixed to the upper portion of the second board 50.

Another example of the pivot support 30 may include: an inner ring 30a coupled to the shaft 20 and having a spherical outer surface; an outer ring 30b having an inner surface spherically in contact with and slidable on the outer surface of the inner ring 30a; and an outer ring fixing part 40 in which the outer ring 30b is fixedly inserted, the outer ring fixing part 40 being fixed to the upper portion of the second board 50. In this case, the inner ring 30a is fixedly coupled to the shaft 20, and the outer ring 30b is fixed to the second board 50 by the outer ring fixing part 40 fixed to the upper portion of the second board 50.

The outer ring fixing part 40 is a member for fixing the outer ring 30b of the pivot support 30 to the second board 50, and the outer ring fixing part 40 may be bolted to the second board 50. However, the present invention is not limited to bolting the outer ring fixing part 40 to the second board 50. For example, coupling methods using an adhesive, a snap ring, or screws may be used, or a one-piece forming method may be used. It should be understood that these alternative configurations are also included in the scope of the present invention. In addition, the outer ring fixing part 40 may not be used when the outer ring 30b of the pivot support 30 is fixed to the second board 50 by a direct coupling method, and it should be understood that this alternative configuration is also included in the scope of the present invention.

Another example of the pivot support 30 may include: an inner ring 30a formed in one piece with the shaft 20 and having a spherical outer surface; an outer ring 30b having an inner surface spherically in contact with and slidable on the outer surface of the inner ring 30a; and an outer ring fixing part which the outer ring 30b is inserted into, the outer ring fixing part being fixed to the upper portion of the second board 50. In this case, the inner ring 30a is formed in one piece with the shaft 20, that is, the shaft 20 includes the inner ring 30a, and the outer ring 30b is fixed to the second board 50 by the outer ring fixing part 40 fixed to the upper portion of the second board 50.

Another example of the pivot support 30 may include: an inner ring 30a having an inner surface in contact with an outer surface of the shaft 20 and being coupled to the shaft 20; and an outer ring 30b having an inner surface spherically in contact with outer surfaces of insertion solid parts 32c for being rubbed thereon, the insertion solid parts 32c being included on the outer surface of the inner ring 30a, the outer ring 30b being provided to the upper portion of the second board 50. In this case, the inner ring 30a is fixedly coupled to the shaft 20, a pivotal motion is possible owing to the insertion solid parts 32c provided on an outer side of the inner ring 30a, and the outer ring 30b is fixed to the upper portion of the second board 50.

Another example of the pivot support 30 may include: an inner ring 30a having an inner surface contacting an outer surface of the shaft 20 and fixing the shaft 20; an outer ring 30b having an inner surface spherically in contact with outer surfaces of insertion solid parts for being rubbed thereon, the insertion solid parts being included on the outer surface of the inner ring 30a; and an outer ring fixing part in which the outer ring 30b is fixedly inserted, the outer ring fixing part being fixed to the upper portion of the second board. In this case, the inner ring 30a is fixedly coupled to the shaft 20, a pivotal motion is possible owing to the insertion solid parts 32c provided on an outer side of the inner ring 30a, and the outer ring 30b is fixed to the second board 50 by the outer ring fixing part 40 fixed to the upper portion of the second board 50.

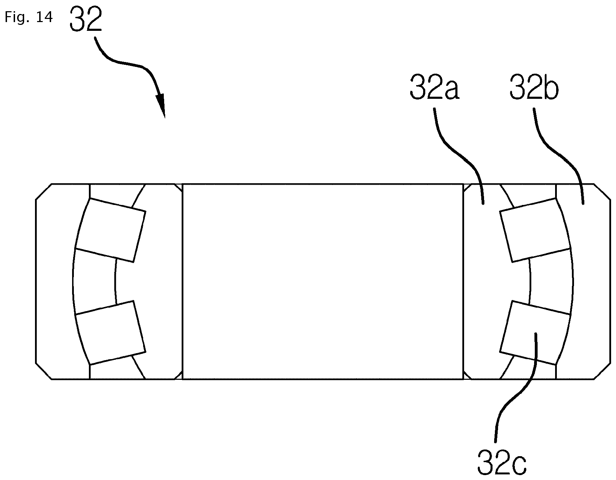

In this case, the pivot support 30 is configured like a self-aligning or self-centering bearing 32 shown in FIG. 14 which includes: an inner ring 32a (of a self-aligning type) having an inner surface contacting an outer surface of the shaft 20 and fixing the shaft 20; and an outer ring 32b having an inner surface spherically in contact with outer surfaces of insertion solid parts 32c for being rubbed thereon, the insertion solid parts 32c being included on the outer surface of the inner ring 32a (of a self-aligning type).

The above-described pivot support 30 of the present invention is not limited to a spherical bearing, an outer ring bearing, or a self-aligning bearing. It should be understood that the pivot support 30 is included in the present invention as a spherical motion support coupled to the shaft 20 for allowing a three-dimensional pivotal motion including shaking and rotating motions.

The second board 50 is coupled to the pivot support 30 directly or by the outer ring fixing part 40 and placed on the floor to support a load while maintaining a constant distance from the first board 10 in a shaft section.

The elastic member 60 is placed between the first board 10 and the second board 50 in contact with the first board 10 and the second board 50 so as to provide elasticity for maintaining the first board 10 in parallel to the second board 50. At least one elastic member 60 is provided.

An end portion of the elastic member 60 is fixedly inserted into one of the first board 10 and the second board 50, and a sliding member 60a is provided on the other of the first board 10 and the second board 50 adjacent to the other end portion of the elastic member 60 such that the other end portion of the elastic member 60 may be slidingly rotated when the other of the first board 10 and the second board 50 is rotated. The sliding member 60a is provided on one or both end portions of the elastic member so as to be rotated when the first board 10 is rotated.

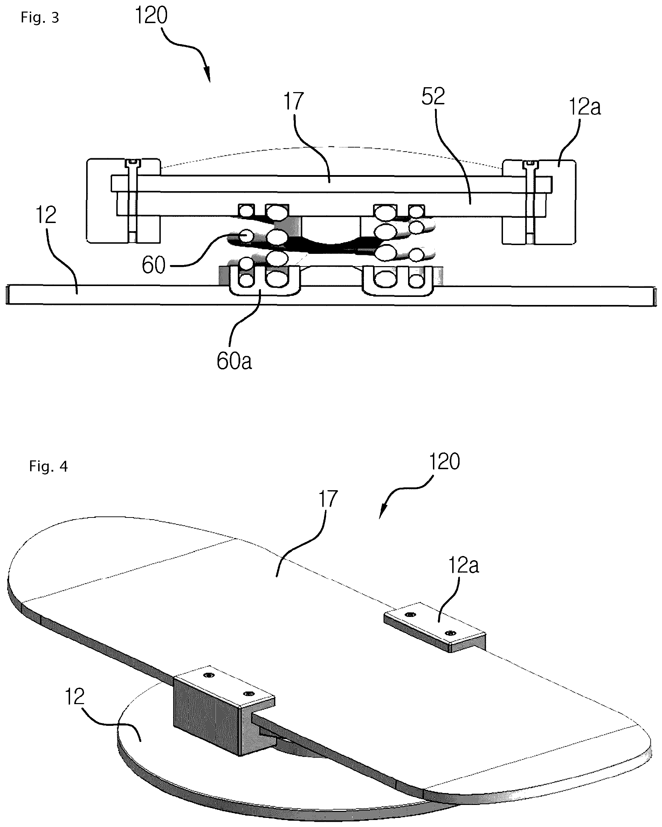

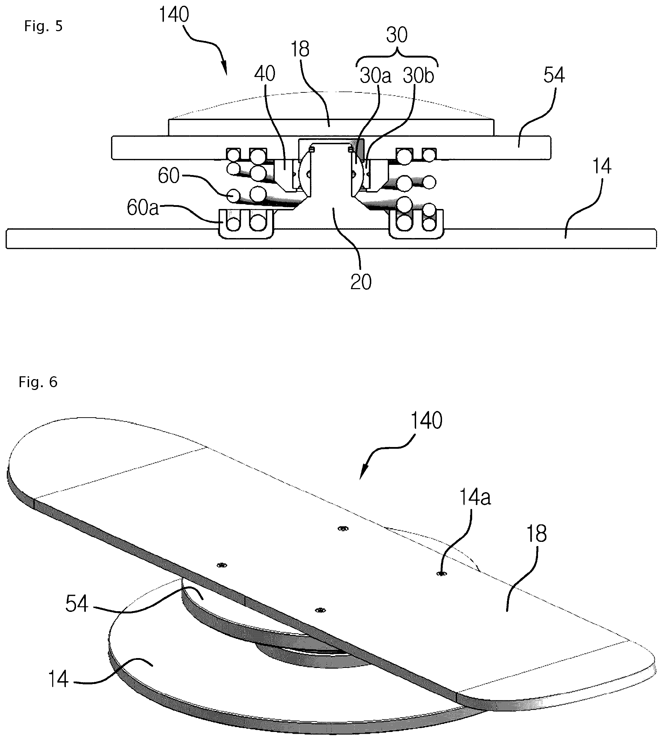

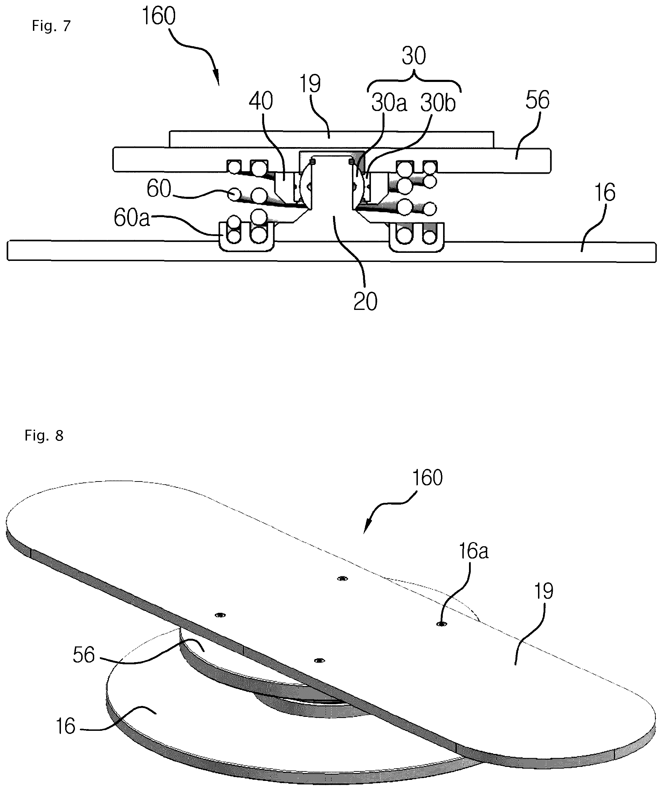

According to the present invention, as shown in FIGS. 3 to 8, an additional board 17, 18, or 19 such as a snowboard or a skateboard may be coupled to an upper portion of one of the first board 10 and the second board 50.

In this case, a board coupling part 12a is further provided on a lateral side of one of the first board 10 and the second board 50 such that an additional board such as a snowboard or a skate board may be coupled to an upper portion of one of the first board 10 and the second board 50.

The additional board 17, 18, or 19 refers to conventional boards having particular uses such as a snowboard or a skateboard or other types of boards having other uses.

The additional board may be coupled using a clamp such as the board coupling part 12a. In the present invention, it should be understood that the clamp is not limited to the above-described type. For example, coupling members having various shapes and forms that can be used to couple the additional board 17 to one of the first board 10 and the second board 50 from a lateral side may be included in the scope of the present invention.

In addition, bolt coupling portions 14a or 16a may be provided to attach the additional board 18 or 19 using bolts.

In addition, according to the present invention, the first board 10 may be placed at a lower side, and the second board 50 may be placed at an upper side. That is, the positions and functions of the first board 10 and the second board 50 may be switched.

In this case, that is, when the positions and functions of the first board 10 and the second board 50 are switched, the additional board 17, 18, or 19 such as a snowboard, a skateboard, or flat board may be coupled to the second board 50 according to user's purposes.

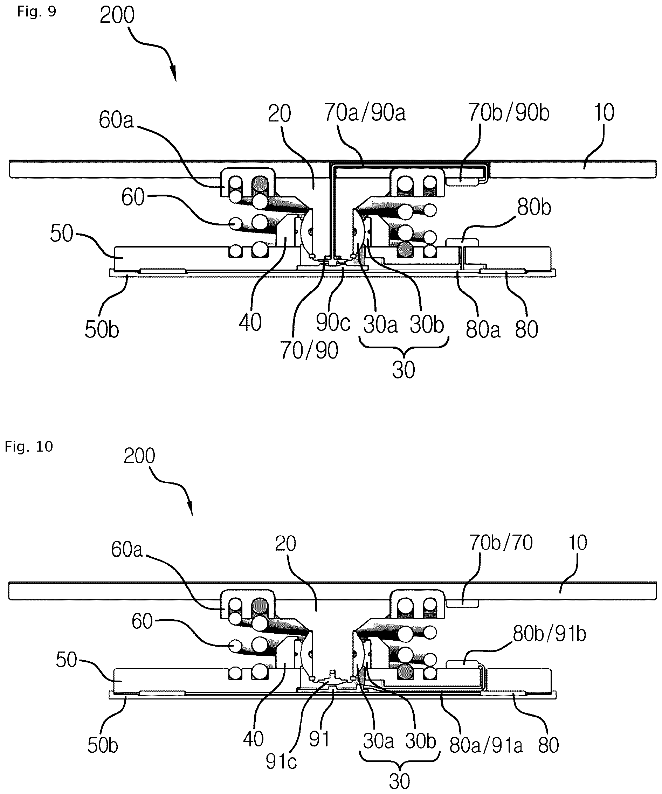

Hereinafter, balance boards will be described according to another aspect of the present invention with reference to FIGS. 9 and 10.

Referring to FIG. 9, according to the aspect of the present invention, the balance boards include at least one of a first sensor part 70, a second sensor part 80, and third sensor part 90 and 91.

The first sensor part 70 senses the movement of the first board or the shaft.

The second sensor part 80 senses a load applied to the first board.

The third sensor parts 90 and 91 are attached to an end of the shaft or a position facing the end of the shaft so as sense positional variations of the shaft.

In addition, referring to FIGS. 9 and 10, the second board 50 includes an additional board 50b which is selectively used when the balance boards 200 include the second sensor part 80. The additional board 50b is not limited to the shape illustrated in FIGS. 9 and 10.

At this time, sensors of the second sensor part 80 may be individually fixed, or the second sensor part 80 may include separate sensors supported by a well-known sensor supporting method. It should be understood that this alternative configuration is also included within the scope of the present invention.

The sensor parts include the first, second, and third sensor parts 70, 80, 90, and 91, and sensor auxiliary parts wherein the sensor auxiliary parts include a first sensor part lead-in line 70a, a first sensor part terminal 70b, a second sensor part lead-in line 80a, a second sensor part terminal 80b, third sensor part lead-in lines 90a and 91a, third sensor part terminals 90b and 91b, and pads 90c and 91c.

Here, the sensor auxiliary parts are examples for arranging the sensor parts, and may be arranged in various well-known manners according to the characteristics of the sensor parts. It should be understood that this alternative configuration is also included in the scope of the present invention.

The first sensor part 70 may include one selected from an acceleration sensor and a gyro sensor to detect motions or gestures such as the position, orientation, rotation, or tilt of a user when the user moves. As illustrated in FIG. 9, the first sensor part 70 is arranged on an end of the shaft 20 or a lower end surface of the first board 10 so as to detect motions or gestures such as the position, orientation, rotation, or tilt of the first board 10 when the first board 10 is moved. However, the arrangement of the first sensor part 70 is not limited thereto. That is, the first sensor part 70 may be arranged at any position as long as it is possible to detect motions or gestures such as the position, orientation, rotation, or tilt of the first board 10 when the first board 10 is moved.

The first sensor part 70 may include a wireless communication unit such as a Bluetooth module, or universal serial bus (USB) cable connector for wireless or wired data communication with a central processing unit (CPU) 400.

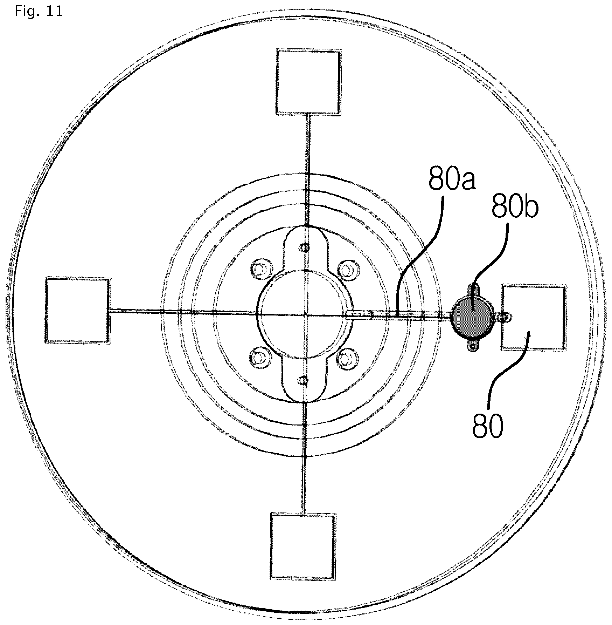

As illustrated in FIG. 11, the second sensor part 80 includes weight sensors arranged on a bottom surface of the second board to sense the weight and the center gravity of the balance boards and a rider. However, the second sensor part 80 is not limited to this arrangement and number of the weight sensors. That is, the weight sensors may be arranged in any manner as long as the weight and center of gravity of the balance boards and a rider can be sensed, and at least one weight sensor may be provided.

Like the first sensor part 70, the second sensor part 80 may include a wireless communication unit such as a Bluetooth module, or universal serial bus (USB) cable connector for wireless or wired data communication with a central processing unit (CPU) 400.

As illustrated in FIG. 9, the third sensor part 90 is placed on an end of the first board 10 to detect variations in the position of the first board 10 when the first board 10 is moved. However, the third sensor part 90 is not limited to the position. That is, the third sensor part 90 may be placed at any position as long as the third sensor part 90 can detect variations in the position of the first board 10 when the first board 10 is moved. The reflective pad 90c is configured to face the third sensor part 90. In addition, as illustrated in FIG. 10, the third sensor part 91 is placed to face the end of the shaft 20 to detect variations of the position of the first board 10 when the first board 10 is moved. The third sensor part 91 is not limited to this position. That is, the third sensor part 91 may be placed at any position as long as the third sensor part 91 can detect variations of the position of the first board 10 when the first board 10 is moved. The reflective pad 91c is configured to face the third sensor part 91.

The basic mechanism of a position detection sensor for a computer mouse may be applied to the positional variation detection function and configuration of the third sensor parts 90 and 91. The position detection sensor applicable to the present invention may be the same as a contact type computer ball mouse in which a ball configured to rotate on the reflective pads 90c and 91c facing the third sensor parts 90 and 91 is used to detect positional variations, or may be the same as a non-contact type computer optical mouse in which light is emitted to the reflective pads 90c and 91c facing the third sensor parts 90 and 91 to detect positional variations by sensing reflected light.

Like the first sensor part 70, the third sensor parts 90 and 91 may include a wireless communication unit such as a Bluetooth module, or universal serial bus (USB) cable connector for wireless or wired data communication with the central processing unit (CPU) 400.

FIG. 11 is a cross-sectional view schematically illustrating a configuration in which the balance boards 200 includes the second sensor part 80 according to the present invention.

Referring to FIG. 11, at least one weight sensor is supported by the additional board 50b on a lower portion of the second board 50.

FIG. 12 is a cross-sectional view schematically illustrating the pivot support (spherical bearing) 30 of the compact balance boards 100 of the present invention.

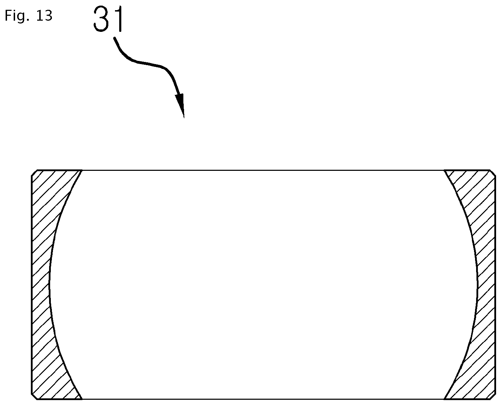

FIG. 13 is a cross-sectional view schematically illustrating a pivot support (outer ring bearing) 31 of the compact balance boards 100 of the present invention.

FIG. 14 is a cross-sectional view schematically illustrating a pivot support (self-aligning bearing) 32 of the compact balance boards 100 of the present invention.

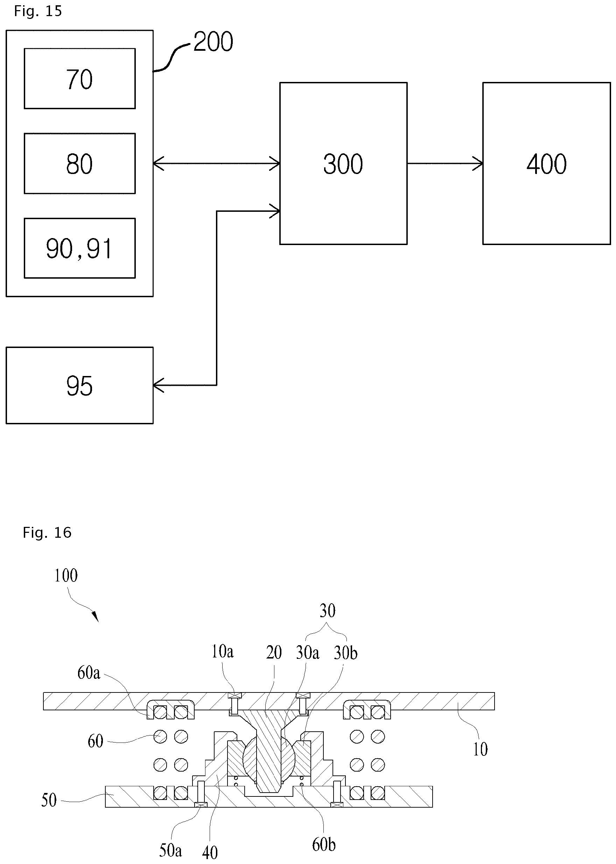

Next, a system using balance boards of the present invention will be described with reference to FIG. 15.

Referring to FIG. 15, the system using the balance boards of the present invention includes balance boards 200, an external input device 95, a central processing unit (CPU) 400, and a display unit 500.

Signals containing information such as motion information, weight information, or position information of a user is transmitted from a first sensor part 70, a second sensor part 80, and third sensor parts 90 and 91 of the balance boards 200 to the CPU 400 by a wireless or wired communication method.

The external input device 95 includes: a clicking device such as a mouse or a joystick for selecting an item on the display unit 500 and inputting an execution command; and a keyboard for inputting additional information and execution commands.

As a user moves, the CPU 400 receives signals from devices such as the external input device 95 and at least one of the first, second, and third sensor parts 70, 80, 90, and 91 of the balance boards 200 so as to process data corresponding to the signals. The display unit 500 outputs information received from the CPU 400. Therefore, a user of the balance boards 200 may correct his/her posture on the first board 10 while watching information on the display unit 500, or may perform various programs such as a fitness program, a training program, a health program, a rehabilitation program, a sport simulation, or a game, and even an computer-aided office job.

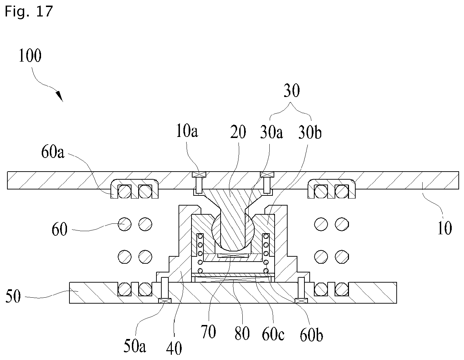

FIGS. 16 and 17 are cross-sectional views illustrating compact balance boards according to the present invention.

Referring to FIGS. 16 and 17, the compact balance boards 100 of the present invention further includes an auxiliary elastic member 60b placed between the outer ring 30b and the second board 50 to elastically support vertical shaking of the first board 10 or the second board 50.

The auxiliary elastic member 60b may be inserted under the outer ring 30b and may elastically support vertical shaking of the first board 10 or the second board 50 while being firmly supported on an upper portion of the second board 50. In addition, the auxiliary elastic member 60b may be installed on a base plate 60c additionally provided on the upper portion of the second board 50.

Owing to this, balance exercise may be performed while feeling vertical shaking enabled by the space between the first board 10 and the second board 50 in addition to the above-described three-dimensional pivotal motion including shaking and rotation, and when the compact balance boards 100 are used for a sport simulation or a sport game, an exercising effect more similar to the real effect of board sports may be obtained, and thus users may be more interested in the sport simulation or game.

Here, as illustrated in FIG. 17, the first sensor part 70 is placed on a lower portion of the shaft 20 to detect motional information such as position, orientation, rotation, tilt when the first board 10 is moved and the degree of vertical pitching enabled by the auxiliary elastic member 60b as well. The second sensor part 80 is placed on the second board 50, and the base plate 60c is placed on top of the second board 50, such that information such as the weight and center of gravity of the balance boards and a rider may be detected.

Along with this, the second sensor part 80 may detect variations in the weight and center of gravity of the balance boards and a rider when the auxiliary elastic member 60b elastically supports and dampens vertical pitching of the first board 10 or the second board 50. Owing to the first sensor part 70 and the second sensor part 80, exercising effects and interesting effects may be further improved, and in addition, a balance disorder such as a tic disorder may be more accurately detected to maximize curing effects.

As described above, the balance boards and the system using the balance boards of the present invention make it possible to feel three-dimensional motions and thus are suitable for balance exercises. In addition, the balance boards and the system may be suitably used according to purposes such as fitness, training, healthcare, rehabilitation, sport simulation, games, or computer-aided office jobs.

In addition, although a user jerks the boards, a shock-absorbing member may reduce a shock, and since the shaft is not inclined up to a certain angle or greater by supporting sloping of the boards, the boards may be stably used.

It will be apparent to those skilled in the art that various modifications and variations can be made without departing from the spirit and scope of the present invention. Accordingly, the present invention should not be limited to the detailed description but should be defined by the claims.

## Claims

1. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring coupled to the shaft and having a spherical outer surface; and
an outer ring having an inner surface spherically in contact with and slidable on the outer surface of the inner ring, the outer ring being provided to an upper portion of the second board.

2. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring formed in one piece with the shaft and having a spherical outer surface; and
an outer ring having an inner surface spherically in contact with and slidable on the outer surface of the inner ring, the outer ring being provided to an upper portion of the second board.

3. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring coupled to the shaft and having a spherical outer surface;
an outer ring having an inner surface spherically in contact with and slidable on the outer surface of the inner ring; and
an outer ring fixing part in which the outer ring is inserted, the outer ring fixing part being fixed to an upper portion of the second board.

4. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring formed in one piece with the shaft and having a spherical outer surface;
an outer ring having an inner surface spherically in contact with and slidable on the outer surface of the inner ring; and
an outer ring fixing part in which the outer ring is inserted, the outer ring fixing part being fixed to an upper portion of the second board.

5. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring having an inner surface contacting an outer surface of the shaft and being coupled to the shaft; and
an outer ring having an inner surface spherically in contact with an outer surface of an insertion solid part for being rubbed thereon, the insertion solid part being included on an outer surface of the inner ring, the outer ring being provided to an upper portion of the second board.

6. Compact balance boards comprising:
a first board having a plate shape;
a second board spaced a predetermined distance from a lower portion of the first board and parallel to the first board;
a shaft coupled to a bottom portion of the first board or extending in one piece from the bottom portion of the first board;
a pivot support connecting the shaft and the second board so as to allow three-dimensional pivotal motions in which the first board or the second board is shaken and rotated;
at least one elastic member positioned between the first board and the second board in contact with the first board and the second board so as to provide elasticity for keeping the first board and the second board in parallel to each other; and
a sliding member installed on one end portion or both end portions of the elastic member so as to allow the elastic member to be slidingly rotated when the first board or the second board is rotated,
wherein the pivot support comprises:
an inner ring having an inner surface contacting an outer surface of the shaft and being coupled to the shaft;
an outer ring having an inner surface spherically in contact with an outer surface of an insertion solid part for being rubbed thereon, the insertion solid part being included on an outer surface of the inner ring; and
an outer ring fixing part in which the outer ring is inserted, the outer ring fixing part being fixed to an upper portion of the second board.

7. The compact balance boards of any one of claims 1 to 6, further comprising a board coupling part to attach an additional board including a snowboard or a skateboard to the first or the second board.

8. The compact balance boards of any one of claims 1 to 6, further comprising any one selected from:
a first sensor part configured to sense a movement of the first board or the shaft;
a second sensor part configured to sense a load applied to the first board; and
a third sensor part attached to an end of the shaft or a position facing the end of the shaft so as to sense a positional variation of the shaft.

9. A balance board system comprising:
the compact balance boards of claim 8;
a central processing unit configured to receive a signal from at least one of the first to third sensor parts and process information; and
a display unit configured to display information received from the central processing unit.

10. The balance board system of claim 9, further comprising an external input device to input information to the central processing unit.

11. The compact balance boards of any one of claims 1 to 6, further comprising an auxiliary elastic member placed between the outer ring and the second board so as to elastically support vertical shaking of the first board or the second board.
